# EUROPEAN PATENT SPECIFICATION

(11) **EP 3 279 616 B1**
(45) Date of publication and mention of the grant of the patent: **13.11.2019**
(21) Application number: 17001104.3
(22) Date of filing: 28.06.2017
(51) Int. Cl.: F01D 5/04, F01D 25/24, G01F 25/00, G01F 1/06, G01F 1/08, G01F 15/00

(54) **FLUID METER, IN PARTICULAR FOR LIQUIDS, PROVIDED WITH AN INTEGRATED ADJUSTMENT DEVICE**
STRÖMUNGSMESSER MIT INTEGRIERTER EINSTELLUNGSVORRICHTUNG, INSBESONDERE FÜR FLÜSSIGKEITEN
COMPTEUR DE FLUIDE, EN PARTICULIER POUR DES LIQUIDES, DOTÉ D'UN DISPOSITIF DE RÉGLAGE INTÉGRÉ

(30) Priority: 02.08.2016 FR 1657484
(43) Date of publication of application: 07.02.2018
(73) Proprietor: Diehl Metering S.A.S., 68300 Saint-Louis (FR)
(72) Inventor: DEVILLERS, Alexandre, FR - 68190 Enisheim (FR); MUNCK, Christophe, FR - 68130 Hausgauen (FR)
(74) Representative: Diehl Patentabteilung

(56) References cited:
- EP-A2- 0 100 393
- CH-A5- 671 461
- DE-A1- 1 623 929
- DE-A1- 19 727 150
- DE-C- 176 066
- DE-C- 437 987
- DE-C- 447 904
- DE-U1- 9 405 709
- GB-A- 163 919
- JP-B2- 3 100 683
- US-A- 1 301 245

## Description

The present invention relates to the field of devices or apparatus for measuring fluids, such as meters for water, gas and the like, in particular those installed in individual residences.

In order to guarantee a high level of reliability, meters have to be calibrated in order to ensure, with an acceptable margin of error, that the quantity or flow rate of fluid which has been measured does indeed correspond to that which has passed through the measuring instrument.

This involves measuring, for example, the measurement error actually observed (in %) as a function of the flow rate (in litres/hour) and thus establishing a curve, at least a significant portion of which has to fall within a predefined frame of tolerances which is judged to be acceptable. To that end, currently known meters are provided with an attached adjustment part consisting of a small deflector that is mounted eccentrically (with respect to the axis of rotation of the turbine of the meter) and is able to pivot on itself. This device is mounted at the inlet into the circular main chamber of the meter, into which the fluid arrives before being conveyed through said turbine and evacuated from this chamber via an outlet which is generally located diametrically opposite. Verification and calibration are generally carried out empirically by turning said flow deflector until the resulting change causes the curve of the measure of the error observed to "fall" within the predefined frame of tolerances, at least over the relevant flow rate ranges, that is to say those for which it is necessary that the measurement error is well below the established tolerance.

However, this type of device and *modus operandi* have a certain number of drawbacks.

Indeed, the fact of adding an additional adjustment part complicates the manufacture of the meter, thus giving rise to increased costs. Moreover, this part is not easily accessible from the outside and is difficult to handle, making the above adjustment fiddly in practice. Finally, for structural reasons, this part which can pivot through 360° can have only relatively small dimensions - and therefore a relatively small surface area of the deflector proper - which, in addition to its eccentric location, provides only a slight or moderate effect on the fluid flow, and therefore reduced room for manoeuvre for the operator when the latter has to adjust the meter for different flow rates or volumes.

From JP 3 100 683 B2 a water meter comprising an impeller is known. Above the impeller a regulator is mounted attached to a water-barrier member of the meter housing. The water-barrier member is attached to the outer housing walls by a case top.

Adjustable damming fins used in water meters are also known from DE 176 066 C or DE 1 623 929 A1.

The present invention has the object of countering at least some of these drawbacks.

This object is achieved by providing a meter, in particular a meter for fluids, in particular for liquids and preferably water, according to claim 1.By virtue of this solution, the construction of the meter is simplified and the adjustment operation is made much easier by the fact that the operator can more easily actuate the adjusting device, and that the latter has a greater effect on the fluid flow, which increases the accuracy of the adjustment and thus the margin for manoeuvre for the operator in terms of calibration.

The invention will be better understood with the aid of the following description, which relates to a preferred embodiment given by way of non-limiting example and explained with reference to the appended schematic drawings, in which:
- figure 1 is a perspective view of a water meter according to the invention, in vertical section through the middle;
- figure 2 is an enlarged view of the interior of the meter of figure 1, with certain parts shown in section and others shown three-dimensionally;
- figures 3a, 3b and 3c are perspective views of a support element for a meter according to the invention; and
- figure 4 is a perspective view of the meter according to the invention during an adjustment operation, with the various associated measurement curves.

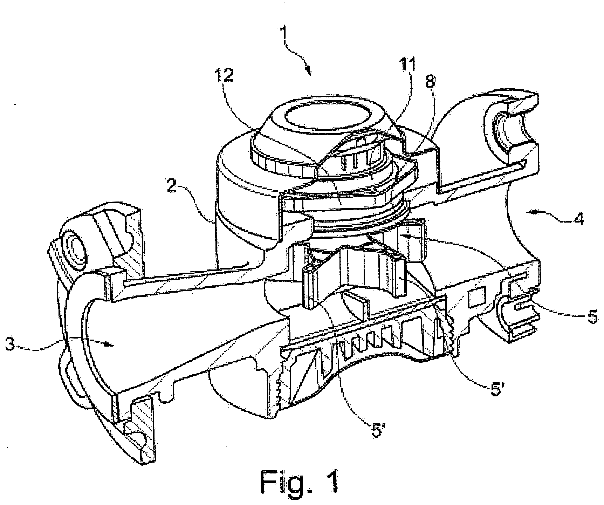

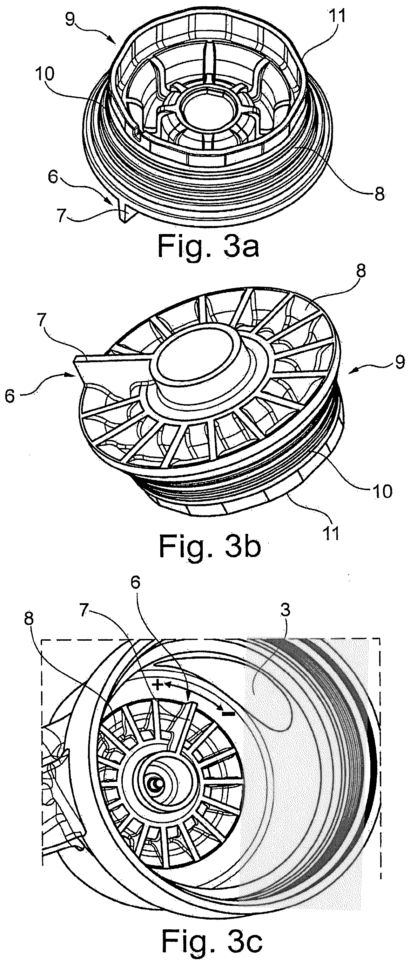

Figure 1 shows, schematically, a conventional meter 1, in this case for example a water meter. This takes the form of a main housing 2 (generally of cast iron) containing a measurement device which is known per se, and provided with a lid and a removable cover as well as fluid inlet and outlet ducts, these also being made of cast iron, preferably in one piece with the housing 2. In accordance with the present invention, the meter 1, in particular a meter for fluids, in particular for liquids and preferably water, comprises in essence a housing 2 provided with a fluid inlet opening 3 and a fluid outlet opening 4, a turbine 5 having radial blades 5' and actuated by the movement of the fluid between said inlet 3 and outlet 4 openings, said housing 2 having mounted on it a device for measuring the movement of said turbine 5, whereas a means 6 for deviating the flow of fluid is provided, said means 6 being actuable from outside said housing 2, preferably manually and directly. The means 6, which is not shown in figure 1, will be described in greater detail below with regard to figures 3a, 3b and 3c.

For the sake of clarity, figure 1 shows certain internal parts of the meter 1, such as the measuring device or the radial blades 5', as whole, three-dimensional parts. The geometry of the radial blades 5' is also given as an illustrative and non-limiting example. It is therefore clear that the fluid - of which the flow rate or quantity used - is to be measured enters on the left, encounters the radial blades 5' closest to the inlet opening 3, and is then transported through the turbine 5 to re-emerge on the right at the outlet opening 4. Topping, capping and receiving the vertical axle of the turbine 5 is a support element 8 that is provided with the means 6 (not shown here), the support element 8 being secured to and held on the housing 2, at a bearing face, by a holding nut 12, of which two faces of the polygonal peripheral contour are shown in the figure. Said support element 8 also serves as a housing for the device for measuring the movement of said turbine, of which the make-up and operation are also known per se and require no further explanation in the context of the present invention. It is sufficient that this measuring device allows the user access to those parameters, of the meter 1 in question, that are to be measured and adjusted, for example by way of a conventional optical sensor and/or a conventional counter.

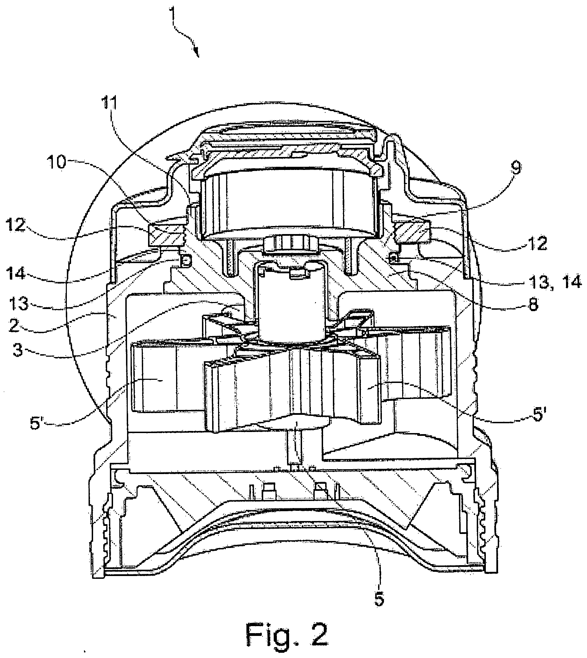

Figure 2 is an enlarged view of the central region of the meter 1 of figure 1, and better shows various constituent parts which will be described in greater detail later on, in particular the support element 8.

As shown clearly in figures 3a, 3b and 3c in relation to figures 1 and 2, the meter 1 according to the invention is characterized in that the means 6 for deviating the flow is in the form of an orientable wall portion or chicane 7, which is preferably planar, , said orientable chicane 7 extending radially and in an essentially vertical plane. Depending on the chosen geometry, this plane is more or less parallel to that formed by one of the radial blades 5' of said turbine 5.

Advantageously, the orientable chicane 7 and the turbine 5 are coaxial, and said orientable chicane 7 is secured to a support element 8 which is mounted so as to be free to rotate also coaxially about the axis of rotation of the turbine 5, and of which the movement in rotation can be controlled from outside said housing 2, preferably manually and directly.

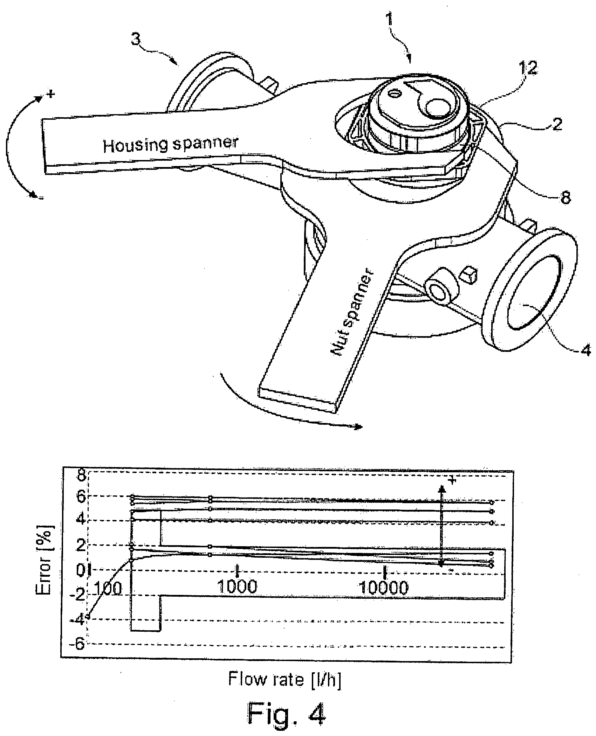

This mode of operation will be described later on, in particular in relation to figure 4.

According to the invention, the meter is further characterized in that the support element 8 comprises a base part in the form of a horizontal circular disc that extends perpendicular to the vertical axis of rotation of the turbine 5 and is provided with a wall portion which extends radially and vertically from the lower face of said disc so as to form an orientable chicane 7 for the fluid flow, the upper face of said disc being provided with a circular collar or skirt 9 that extends as far as an external portion of the housing 2 in which flows the fluid that is to be measured, it being possible, by rotating said collar 9, to control the orientation of the wall portion forming the orientable chicane 7 for deviating the fluid.

As shown in particular in figures 3a and 3b, the collar 9 has, in its outer portion facing the user, an annular thread 10. This annular thread 10 of the collar 9 is advantageously extended, in the vertical direction away from the housing 2, by a free wall portion 11 of said collar 9, of which the external shape is polygonal. Thus, this polygonal contour has, on its outer surface, a succession of rectangular faces which permit good engagement with a spanner as shown in figure 4.

According to another feature, a holding nut 12 engages with the annular thread 10 of the collar 9 of the support element 8 in order to hold it on an external wall of the housing 2 of the meter 1 (cf. in particular figure 2).

Preferably, the external shape of the holding nut 12 is polygonal. In the manner of the free wall 11, such a geometry will make it easier to use the invention, as will also be shown in relation to figure 4, by providing good engagement with the nut spanner as shown.

In order to ensure optimal sealing of the meter 1, it is possible to also advantageously provide that the collar 9 of the support element 8 has at least one annular groove 13 provided with an O-ring 14 in order to seal the support element 8 with respect to the housing 2 of the meter 1.

As already mentioned, the meter 1 according to the invention is further characterized in that the collar 9 of the support element 8 is designed to receive at least part of the device for measuring the movement of the turbine, by means of which it is possible to measure the flow rate and/or the volume of fluid passing through the meter 1. This can be made possible by the walls of the collar 9, and by conventional mechanical means for receiving, holding and/or securing said device, such as bearings, etc.

According to the invention, the means 6 (that is to say the chicane 7) and the support element 8 are made in one piece of a synthetic material, preferably an injection-moulded plastic material. This makes it possible to reduce the production costs for a meter, saving one part, one assembly operation and substituting the brass which is normally used for a less costly material. Radial reinforcing ribs, recesses, grooves such as the annular groove 13, etc. can also be readily created in this manner in the body of the support element 8.

As shown in figure 4 in relation to figure 3c, it is sufficient, in order to calibrate the meter 1, simply to turn the housing spanner sufficiently in the +/direction indicated, loosening then re-tightening the holding nut 12 with a second spanner in order to pivot the means 6 until the curve measuring the measurement error (%) is close enough to the established tolerances, that is to say until the effective measurement curve is completely or at least partially contained within the tolerance frame, which is in this case shown in the form of a reclining "T" in the graph associated with figure 4. This adjustment operation can be carried out directly on a bench without it being necessary to remove the counter and the optical sensor that are present in the measuring device of the meter 1. This makes it possible to save time and to increase reliability and/or flexibility, since the margin for manoeuvre (cf. the range between the + and the - in the graph associated with figure 4) is greater in comparison to the conventional devices known from the prior art.

Of course, the invention is not limited to the embodiments described and represented in the appended drawings. Modifications remain possible, in particular with respect to the make-up of the various elements, or by substitution of equivalent techniques, without in so doing departing from the protective scope of the invention.

## Claims

1. Meter (1), in particular a meter for fluids, in particular for liquids and preferably water, that comprises in essence a housing (2) provided with a fluid inlet opening (3) and a fluid outlet opening (4), a turbine (5) having radial blades (5') and actuated by the movement of the fluid between said inlet (3) and outlet (4) openings, said housing (2) having mounted on it a device for measuring the movement of said turbine (5), wherein topping, capping and receiving the vertical axle of the turbine (5) is a support element (8),
whereas a means (6) for deviating the flow of fluid is provided, said means (6) being actuable from outside said housing (2),
whereas the means (6) for deviating the flow is in the form of an orientable chicane (7), said orientable chicane (7) extending radially and in an essentially vertical plane,
whereas the orientable chicane (7) and the turbine (5) are coaxial, and said orientable chicane (7) is secured to the support element (8) which is mounted so as to be free to rotate also coaxially about the axis of rotation of the turbine (5), and of which the movement in rotation can be controlled from outside said housing (2),
whereas the support element (8) comprises a base part in the form of a horizontal circular disc that extends perpendicular to the vertical axis of rotation of the turbine (5) and is provided with a wall portion which extends radially and vertically from the lower face of said disc so as to form the orientable chicane (7) for the fluid flow, the upper face of said disc being provided with a circular collar (9) that extends as far as an external portion of the housing (2) in which flows the fluid that is to be measured, it being possible, by rotating said collar (9), to control the orientation of the wall portion forming the orientable chicane (7) for deviating the fluid,
the meter being **characterized in that** the collar (9) has, in its outer portion facing the user, an annular thread (10) and that a holding nut (12) engages with the annular thread (10) of the collar (9) of the support element (8) in order to hold it on an external wall of the housing (2) of the meter (1).

2. Meter (1) according to Claim 1, **characterized in that** the means (6) for deviating the flow of fluid are actuable manually and directly from outside the housing (2).

3. Meter (1) according to Claim 1 or 2, **characterized in that** the orientable chicane (7) is planar.

4. Meter (1) according to one of the Claims 1 to 3, **characterized in that** the support element's (8) movement in rotation can be controlled manually and directly from outside the housing (2).

5. Meter (1) according to one of the Claims 1 to 4, **characterized in that** the annular thread (10) of the collar (9) is extended by a free wall portion (11) of said collar (9), of which the external shape is polygonal.

6. Meter (1) according to one of the Claims 1 to 5, **characterized in that** the external shape of the holding nut (12) is polygonal.

7. Meter (1) according to any one of Claims 1 to 6, **characterized in that** the collar (9) of the support element (8) has at least one annular groove (13) provided with an O-ring (14) in order to seal the support element (8) with respect to the housing (2) of the meter (1).

8. Meter (1) according to any one of Claims 1 to 7, **characterized in that** the means (6) and the support element (8) are made in one piece of a synthetic material, preferably an injection-moulded plastic material.

## Patentansprüche

1. Durchflussmesser (1), insbesondere für Strömungsmittel, insbesondere für Flüssigkeiten und vorzugsweise Wasser, der im Wesentlichen ein Gehäuse (2) umfasst, das mit einer Strömungsmitteleinlassöffnung (3) und einer Strömungsmittelauslassöffnung (4), einer Turbine (5) mit radialen Schaufeln (5'), die durch die Bewegung des Strömungsmittels zwischen der Einlassöffnung (3) und der Auslassöffnung (4) betätigt werden, versehen ist, wobei das Gehäuse (2) eine daran befestigte Vorrichtung zum Messen der Bewegung der Turbine (5) aufweist, wobei das Aufsetzen, Abdecken und die Aufnehmen der vertikalen Achse der Turbine (5) durch ein Tragelement (8) erfolgt,
wobei ein Mittel (6) zum Umlenken des Strömungsmittelstroms vorgesehen ist, wobei das Mittel (6) von außerhalb des Gehäuses (2) betätigbar ist,
wobei das Mittel (6) zum Umlenken der Strömung in Form einer ausrichtbaren Schikane (7) vorliegt, wobei sich die ausrichtbare Schikane (7) radial und in einer im Wesentlichen vertikalen Ebene erstreckt,
wobei die ausrichtbare Schikane (7) und die Turbine (5) koaxial sind und die ausrichtbare Schikane (7) an dem Tragelement (8) befestigt ist, das so gelagert ist, dass es sich ebenfalls koaxial um die Drehachse der Turbine (5) frei drehen kann,
und von dem die Drehbewegung von außerhalb des Gehäuses (2) gesteuert werden kann,
wobei das Tragelement (8) ein Basisteil in Form einer horizontalen kreisförmigen Scheibe umfasst, die sich senkrecht zur vertikalen Drehachse der Turbine (5) erstreckt und mit einem Wandabschnitt versehen ist, der sich radial und vertikal von der Unterseite der Scheibe erstreckt, um die ausrichtbare Schikane (7) für den Strömungsmittelstrom zu bilden, wobei die Oberseite der Scheibe mit einem kreisförmigen Kragen (9) versehen ist, der sich bis zu einem äußeren Abschnitt des Gehäuses (2) erstreckt, in dem das zu messende Strömungsmittel strömt, wobei es durch Drehen des Kragens (9) möglich ist, die Ausrichtung des Wandabschnitts zu steuern, der die ausrichtbare Schikane (7) zum Umlenken des Strömungsmittels bildet,
wobei der Durchflussmesser **dadurch gekennzeichnet ist, dass** der Kragen (9) in seinem dem Benutzer zugewandten Außenabschnitt ein Ringgewinde (10) aufweist und dass eine Haltemutter (12) in das Ringgewinde (10) des Kragens (9) des Tragelements (8) eingreift, um es an einer Außenwand des Gehäuses (2) des Durchflussmessers (1) zu halten.

2. Durchflussmesser (1) nach Anspruch 1, **dadurch gekennzeichnet, dass** das Mittel (6) zum Umlenken des Strömungsmittelstroms manuell und direkt von außerhalb des Gehäuses (2) betätigbar ist.

3. Durchflussmesser (1) nach Anspruch 1 oder 2, **dadurch gekennzeichnet, dass** die ausrichtbare Schikane (7) eben ist.

4. Durchflussmesser (1) nach einem der Ansprüche 1 bis 3, **dadurch gekennzeichnet, dass** die Drehbewegung des Tragelements (8) manuell und direkt von außerhalb des Gehäuses (2) steuerbar ist.

5. Durchflussmesser (1) nach einem der Ansprüche 1 bis 4, **dadurch gekennzeichnet, dass** das Ringgewinde (10) des Kragens (9) durch einen freien Wandabschnitt (11) des Kragens (9) verlängert ist, dessen Außenform mehreckig ist.

6. Durchflussmesser (1) nach einem der Ansprüche 1 bis 5, **dadurch gekennzeichnet, dass** die äußere Form der Haltemutter (12) mehreckig ist.

7. Durchflussmesser (1) nach einem der Ansprüche 1 bis 6, **dadurch gekennzeichnet, dass** der Kragen (9) des Tragelements (8) mindestens eine Ringnut (13) aufweist, die mit einem O-Ring (14) versehen ist, um das Tragelement (8) gegenüber dem Gehäuse (2) des Durchflussmessers (1) abzudichten.

8. Durchflussmesser (1) nach einem der Ansprüche 1 bis 7, **dadurch gekennzeichnet, dass** das Mittel (6) und das Tragelement (8) aus einem Stück eines synthetischen Materials, vorzugsweise eines spritzgegossenen Kunststoffs, hergestellt sind.

## Revendications

1. Compteur (1), en particulier compteur pour fluides, en particulier pour liquides et de préférence pour de l'eau, qui comprend essentiellement un boîtier (2) muni d'une ouverture d'entrée de fluide (3) et d'une ouverture de sortie de fluide (4), une turbine (5) ayant des aubes radiales (5') et étant actionnée par le mouvement du fluide entre lesdites ouvertures d'entrée (3) et de sortie (4), ledit boîtier (2) ayant monté dessus un dispositif pour mesurer le déplacement de ladite turbine (5), l'élément supérieur de recouvrement et de réception de l'axe vertical de la turbine (5) étant un élément de support (8),
un moyen (6) pour dévier l'écoulement de fluide étant prévu, ledit moyen (6) étant actionnable à partir de l'extérieur dudit boîtier (2),
le moyen (6) pour dévier l'écoulement étant sous la forme d'une chicane orientable (7), ladite chicane orientable (7) s'étendant radialement et dans un plan essentiellement vertical,
la chicane orientable (7) et la turbine (5) étant coaxiales, et ladite chicane orientable (7) étant fixée à l'élément de support (8) qui est monté de manière à être libre de tourner également coaxialement autour de l'axe de rotation de la turbine (5), et dont le mouvement en rotation peut être commandé à partir de l'extérieur dudit boîtier (2),
l'élément de support (8) comprenant une partie de base sous la forme d'un disque circulaire horizontal qui s'étend perpendiculairement à l'axe vertical de rotation de la turbine (5) et étant muni d'une partie de paroi qui s'étend radialement et verticalement depuis la face inférieure dudit disque afin de former la chicane orientable (7) pour l'écoulement du fluide, la face supérieure dudit disque étant munie d'une collerette circulaire (9) qui s'étend jusqu'à une partie externe du boîtier (2) dans laquelle s'écoule le fluide à mesurer, étant possible par rotation de ladite collerette (9), de commander l'orientation de la partie de paroi formant la chicane orientable (7) pour dévier le fluide,
le compteur étant **caractérisé en ce que** la collerette (9) a, dans sa partie extérieure tournée vers l'utilisateur, un filetage annulaire (10) et **en ce qu'**un écrou de maintien (12) vient en prise avec le filetage annulaire (10) de la collerette (9) de l'élément de support (8) afin de le maintenir sur une paroi externe du boîtier (2) du compteur (1).

2. Compteur (1) selon la revendication 1, **caractérisé en ce que** le moyen (6) pour dévier l'écoulement de fluide est actionnable manuellement et directement à partir de l'extérieur du boîtier (2).

3. Compteur (1) selon la revendication 1 ou 2, **caractérisé en ce que** la chicane orientable (7) est plane.

4. Compteur (1) selon l'une des revendications 1 à 3, **caractérisé en ce que** le mouvement de rotation de l'élément de support (8) peut être commandé manuellement et directement à partir de l'extérieur du boîtier (2).

5. Compteur (1) selon l'une des revendications 1 à 4, **caractérisé en ce que** le filetage annulaire (10) de la collerette (9) est prolongé par une partie de paroi libre (11) de ladite collerette (9), dont la forme externe est polygonale.

6. Compteur (1) selon l'une des revendications 1 à 5, **caractérisé en ce que** la forme externe de l'écrou de maintien (12) est polygonale.

7. Compteur (1) selon l'une quelconque des revendications 1 à 6, **caractérisé en ce que** la collerette (9) de l'élément de support (8) a au moins une rainure annulaire (13) munie d'un joint torique (14) afin de rendre étanche l'élément de support (8) par rapport au boîtier (2) du compteur (1).

8. Compteur (1) selon l'une quelconque des revendications 1 à 7, **caractérisé en ce que** le moyen (6) et l'élément de support (8) sont réalisés d'une seule pièce en matière synthétique, de préférence en matière plastique moulée par injection.
